(19) Europäisches Patentamt / European Patent Office / Office européen des brevets

(11) **EP 3 026 465 A2**

(12) **EUROPEAN PATENT APPLICATION**

(43) Date of publication:
01.06.2016 Bulletin 2016/22

(21) Application number: 15195581.2

(22) Date of filing: 20.11.2015

(51) Int Cl.:
$G01V\ 1/30$ (2006.01) $\qquad$ $G01V\ 99/00$ (2009.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 25.11.2014 GB 201420911

(71) Applicant: **Cognitive Geology Limited**
**Edinburgh**
**EH6 5NP (GB)**

(72) Inventor: **JOHNSON, Luke**
**Edinburgh, Midlothian EH3 8EG (GB)**

(74) Representative: **HGF Limited**
**Delta House**
**50 West Nile Street**
**Glasgow G1 2NP (GB)**

(54) **APPARATUS AND METHOD FOR MAKING GEOLOGICAL PREDICTIONS BY PROCESSING GEOLOGICAL PARAMETER MEASUREMENTS**

(57) A method of processing geological data is provided for input to a geostatistical modelling algorithm to predict a value for a parameter relating to a physical property of the Earth. An input data set corresponding to a measured geological parameter is processed to determine a characteristic function of the input data with respect to a geological measure. The input data is transformed to reduce spatial bias with respect to the geological distance measure by applying an inverse function. A statistical weighting is calculated for the transformation and the transformation and weighting are used to predict a representative value of the physical property corresponding to the measured geological parameter. A data processing apparatus and computer program product are also provided.

| Measure given geological property by sparse sampling | 410 |
| Perform statistical fits of plural geological parameters against geological measure to generate plurality of sub-models | 420 |
| Perform plurality of ordered transformations by selectively removing spatial dependencies | 430 |
| Display calculated 3D geological property distributions to end user via GUI | 440 |
| Calculate statistical significance of probabilistic rankings of sub-models using information repository to generate rankings for nodes of hierarchical tree | 450 |
| Use corrected (stationary) input data set in sequential Gaussian simulation to calculate a geological property | 460 |

FIG 4

## Description

### FIELD OF THE INVENTION

The present invention relates to an apparatus and method for determining a predicted value for a parameter relating a physical property of the Earth's interior from processed geological data.

### BACKGROUND OF THE INVENTION

Various methods of computing three dimensional realisations of subsoil properties from sparsely sampled geological data, to be used for example in characterising hydrocarbon resources, are known. Based upon sparsely sampled geological data, computer modelling is used to perform a prediction of a geological model of an entire reservoir or a physical volume of the Earth's interior that accurately reflects the geological reality. Examples of the types of sparsely sampled data that may be used to constrain the geological model simulation include seismic images, acoustic images, resistivity and/or conductivity measurements, nuclear measurements and rock composition samples. One or more types of sparsely sampled input data can be supplied to the simulation to construct scenarios of various geological properties in a region of three dimensional space corresponding to a volume of the Earth. This geological-property modelling can be used to calculate the viability of exploiting an oil reservoir by providing estimates of a volume for an oil reservoir and/or the geological conditions associated with an oil reservoir, which can have an impact on the economic viability of oil extraction. The predictions made by the geological algorithms are complex and depend on a large number of different parameters such as porosity, permeability, rock-type and saturation level. Often there are inter-dependencies between the parameters, which can be difficult to disentangle. In real oilfield settings, the sparse sampling of data, which may also be imprecise and/or inaccurate, often allows multiple possible valid alternative models of subsoil properties to be constructed.

Known geological (geostatistical) modelling algorithms such as Sequential Gaussian Simulation rely upon an idealistic assumption that the geological parameters being distributed do not have any spatial bias in their distribution. In reality, observed geological properties almost always have some component of spatial dependence on their distributions, due to variations in the geological conditions across a given rock volume. Geological modelling workflows therefore begin by defining a mathematical function which describes the spatial bias. Natural properties will usually retain a component of random noise, which cannot be assigned to a particular trend. The central limit theorem states that the distribution of independent additive processes will tend towards a Gaussian (or normal) distribution (such as porosity), whereas independent multiplicative processes will tend towards a lognormal distribution (such as permeability). Geostatistical methods often assume that the distribution of the randomness has a local spatial dependency, which can be described using a distance function such as a variogram-based method.

This means that all observational datasets (such as porosity or permeability) should be investigated for any dependency to a spatial vector such as burial depth or distance from a locus of sedimentation. Accordingly, any observed or otherwise expected spatial bias to the input data should be defined mathematically and removed or at least reduced using inverse mathematical transformations. However, known methods of pre-processing geological input data to reduce spatial bias are highly subjective and are reliant upon the expertise of the a human expert in the field to identify and characterise the spatial trend and correctly remove/reduce the statistical bias. Furthermore, in real oilfield datasets, the spatial sampling of the input data may be insufficient (due to the sparseness of the sampling) to prove or disprove expected spatial biases. Hence there is a need for a more efficient, more accurate and less subjective system for processing sampled geological data to reduce spatial bias, manage sampling uncertainty and to prepare the input data for geo-statistical modelling routines to determine subsoil parameter(s). Furthermore, a system is needed which can make effective use of analogous datasets to supplement the limited observed data in real oilfield settings.

### BRIEF SUMMARY OF THE DISCLOSURE

According to a first aspect, the present invention provides a method of processing geological data, the method comprising:

receiving an input data set representing a measured geological parameter of a volume of the Earth, the input data set having a set of values for the geological parameter, the values potentially having spatial bias whereby there is a variation in a value of the geological parameter depending upon spatial coordinates within the Earth volume;
analysing the input data of the geological parameter with respect to at least one given geological measure to define a characteristic function of the input data with respect to the at least one given geological measure;
applying an inverse of the characteristic function to the input data to perform a transformation to reduce the spatial bias of the input data set with respect to the given geological measure to generate transformed input data set;

calculating a statistical weighting of the transformation depending upon an estimated accuracy of the determined characteristic function; and

predicting a representative function for the geological parameter with respect to the at least one given geological measure based upon the transformed input data set and the statistical weighting, wherein the geological parameter is a physical property of the Earth's interior.

In some example embodiments the ordered hierarchy of transformations is performed on the input data set and wherein the first hierarchical level comprises transforming the input data set with respect to the given geological measure and a higher hierarchical level comprises transforming with respect to a different geological measure, the transformed input data set from the immediately lower hierarchical level.

In some example embodiments the ordered hierarchy of transformations comprises a plurality of hierarchical nodes, each hierarchical node corresponding to a given transformation sequence having been performed on the input data set and wherein statistical weightings are calculated for at least a subset of the hierarchical nodes.

In some example embodiments the ordered hierarchy of transformations comprises differently ordered permutations of transformations of the input data with respect to a plurality of different geological measures.

In some example embodiments the geological measure comprises one of: a distance from an ancient shoreline; a vertical distance within a single depositional unit; a burial depth in a Cartesian coordinate system; a 2-dimesional map area; a 3 dimensional volume of the Earth; and a true stratigraphic thickness.

In example embodiments the statistical weighting is calculated using at least one of: a sum of squared differences between a cumulative distribution function corresponding to the transformed input data set and a theoretical Gaussian cumulative distribution function; a correlation coefficient of the input data set relative to the determined characteristic function; a standard deviation of the transformed input data set.

In some example embodiments a relative ranking is determined for each node of the hierarchy of transformations, the ranking indicating statistical confidence in the transformation(s) of the corresponding node.

In some example embodiments a cognitive processing query is performed, the query comprising accessing a repository of geological information and adjusting the relative rankings for the hierarchical nodes based upon the cognitive processing query.

The method according to some example embodiments comprises accessing a repository of stored geological information and using information from the repository to augment input data for the measured geological parameter to improve an accuracy of determining the characteristic function.

In some example embodiments information from the repository is used to extend a range in the geological measure relative to a range spanned by the input data for the measured geological parameter.

In some example embodiments the method comprises supplying the transformed input data and the corresponding statistical weighting to a geostatistical modelling algorithm and wherein the geostatistical modelling algorithm reduces in the transformed input data statistical noise that cannot be attributed to geological parameters and subsequently reverses the transformation(s) to restore the measured parameter back to a non-stationary state.

In some embodiments at least one predicted representative value for the geological parameter is derived from the representative function.

According to a second aspect, the present invention provides a computer program product embodied on a computer-readable medium comprising program instructions, configured such that when executed by processing circuitry, cause the processing circuitry to:

receive an input data set representing a measured geological property of a volume of the Earth, the input data set having a set of values a measured parameter, the values of the measured parameter having a potential spatial bias whereby there is a variation in a value of the measured parameter depending upon spatial coordinates within the earth volume;

calculate a behaviour of the input data of the measured parameter with respect to at least one given geological measure to define a characteristic function of the input data with respect to the at least one given geological measure;

apply an inverse of the characteristic function to the input data to perform a transformation to reduce the spatial bias of the input data set with respect to the at least one given geological measure;

calculate a statistical weighting of the transformation depending upon the estimated accuracy of the determined characteristic function; and

predict a representative function of the measured geological parameter with respect to the at least one geological measure using the transformed input data and the statistical weighting wherein the geological parameter is a physical property of the Earth's interior.

According to a third aspect the present invention provides a data processing apparatus comprising:

circuitry for receiving an input data set representing a measured geological property of a volume of the Earth, the input data set having a set of values a measured parameter, the values of the measured parameter potentially having spatial bias whereby there is a variation in a value of the measured parameter depending upon spatial coordinates within the earth volume;

circuitry for calculating a behaviour of the input data of the measured parameter with respect to at least one given geological measure to define a characteristic function of the input data with respect to the at least one given geological measure;

circuitry for applying an inverse of the characteristic function to the input data to perform a transformation to reduce the spatial bias of the input data set with respect to the given geological distance measure;

circuitry for calculating a statistical weighting of the transformation depending upon the estimated accuracy of the determined characteristic function;

circuitry for predicting a representative function for the geological property depending upon the transformed input data and the statistical weighting wherein the geological parameter is a physical property of the Earth's interior..

In some example embodiments the data processing apparatus comprises cognitive processing circuitry for generating queries to an information repository relevant to the input data set and wherein results of the cognitive processing are fed back to at least one of the circuitry for calculating a behaviour, the circuitry for applying an inverse for the characteristic function , the circuitry for calculating a statistical weighting and the circuitry for predicting a representative function to provide a prediction of the representative function dependent upon information from the information repository.

Geological data that is utilised as input to known geostatistical algorithms is typically sparsely sampled relative to the three-dimensional volume of Earth being modelled. The modelled volume will represent the spatial extent of a hydrocarbon reserve and a relevant aquifer volume. One consequence of the sparse sampling together with the large number of geological variables involved and their potentially complex inter-dependencies is that a given set of measured sample data can be reasonably interpreted in a number of different ways with regard to non-stationary behaviour. When modelling the hydrocarbon reserve, a sub-model could be built algorithmically for a plurality of alternative interpretations of the sample data. However, the number of sub-models to be accounted for can be very high due to the large number of variables potentially involved. None of the previously known techniques was able to provide a weighting for any of the individual sub-models (characteristic functions and transformations), but instead treated each sub-model as having an equal likelihood. According to the present technique, calculation of a statistical weighting associated with a characteristic function of the measured geological function with respect to a geological measure (e.g. a geological distance or volume measure) allows for more efficient and accurate modelling, which in turn gives rise to an improved prediction of the parameter of the Earth's interior (e.g. a subsoil property) such as an extractable hydrocarbon volume by the geostatistical algorithm.

## BRIEF DESCRIPTION OF THE DRAWINGS

Embodiments of the invention are further described hereinafter with reference to the accompanying drawings, in which:

Figure 1A schematically illustrates a three dimensional model of a volume of the Earth for use in predicting a geological parameter;

Figure 1B schematically illustrates two different example geological depth measurements;

Figure 2A to 2C schematically illustrate geological parameters in a geological model;

Figure 3A schematically illustrates a data processing apparatus for processing sampled geological data;

Figure 3B schematically illustrates a cognitive processing engine for use in predicting a value of a geological parameter;

Figure 4 is a flow chart schematically illustrating calculation of a geological property by processing sparsely sampled geological data;

Figure 5 schematically illustrates a hierarchical tree of transformations for processing sampled geological data to reduce non-stationary effects;

Figure 6 schematically illustrates a statistical fit to a characteristic curve describing geological sample data;

Figure 7 schematically illustrates a relative ranking of hierarchical nodes of the hierarchical tree of Figure 5 based upon statistical fitting of characteristic curves;

Figure 8 schematically illustrates a modified relative ranking of hierarchical nodes based on the hierarchical tree of Figure 5, in which the rankings of Figure 8 have been adjusted based on responses to cognitive processing queries;

Figure 9 schematically illustrates a series of reverse transformations performed after removal of residual noise by the geostatistical algorithm; and

Figure 10 schematically illustrated an equally weighted cumulative distribution function and a probabilistically weighted distribution function for a geological property.

## DETAILED DESCRIPTION

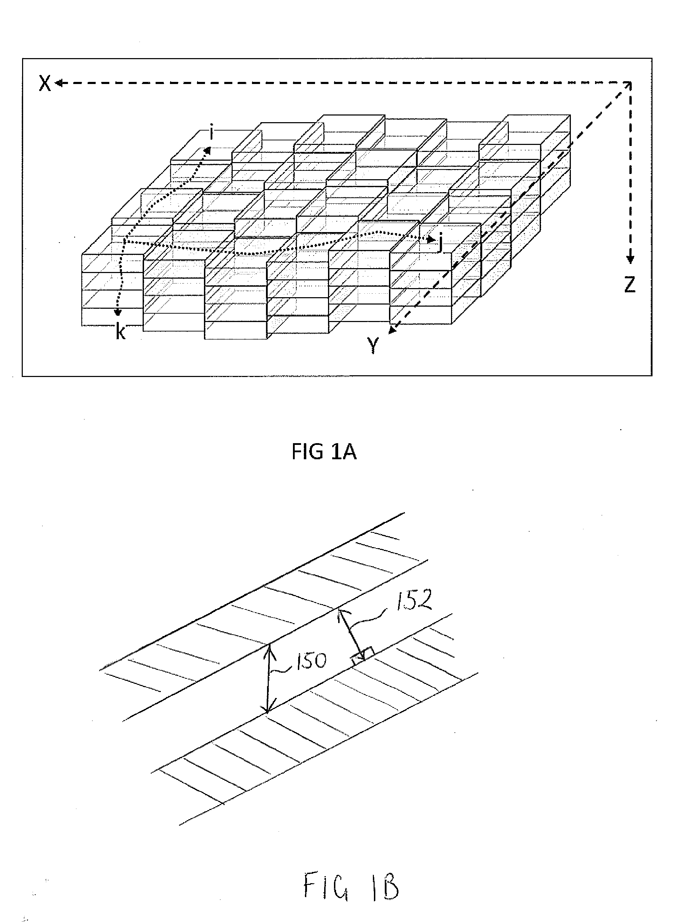

Figure 1A schematically illustrates a three dimensional model of a volume of the Earth for use in modelling of, for example, an oil reservoir. In Figure 1A, the modelled portion of the Earth's volume can be represented in terms of the Cartesian coordinates represented an x-axis 102, a y-axis 104 and a z-axis 106. The Cartesian coordinates, which give a position (x, y, z) in the grid represent the true spatial location at the time that one or more geological parameters are measured.

The Earth volume 100 can alternatively be referenced via a set of grid indices along an i-trajectory 110, a j-trajectory 112 and a k-trajectory 114, which give alternative coordinates (i, j, k) for a given point in space. As shown in Figure 1, the i, j, and k trajectories do not necessarily follow any straight vector in Cartesian space, but instead a references relative to a matrix position within the geological model, itself. Likewise, other alternative vectors may be defined, such as in Figure 1B, which represents the difference between a true vertical thickness, as observed from a plane parallel to the surface of the earth (150) and a true stratigraphic thickness (152), which represents the thickness of the unit perpendicular to the bedding plane. These, and other, vectors of measurement (geological measures) may be referenced in the investigation of non-stationary behaviour of a property of the subsoil. The geological measures according to the present technique are not limited to geological distance measures such as Cartesian depth and stratigraphic depth. Other example geological measures include three-dimensional volumes such as those used for seismic measurements and two-dimensional maps.

Considering the measured geological properties used as an input data set to the geological modeling algorithm, in a stationary dataset, the probability of the *value a* occurring at *location $x_1y_1z_1$* is equally likely as the probability of the *value a* occurring at *location $x_2y_2z_2$*. Conversely, for "non-stationary" data sets which do have a spatial bias, the probability of the *value a* occurring at *location $x_1y_1z_1$* does not necessarily equal the probability of the *value a* occurring at *location $x_2y_2z_2$*. In order to apply conventional geo-statistical methods correctly, the spatial bias can be defined mathematically, and the trends can be removed from the dataset by inverse mathematical transformations.

$$\textit{Equation 1: Stationary data} \qquad P(a \mid x_1y_1z_1)=P(a \mid x_2,y_2,z_2)$$

It will be appreciated that in real geological systems, non-stationary behaviour of geological parameters is the norm due, for example, to changes in rock density and temperature with increasing depth from the surface. Furthermore, more than one process is likely to have affected the rock properties over the course of geological time. The cumulative effect of the geological processes on a particular property may result in a highly complex non-stationary behavior with correlations between the values of and the characteristic trends of different geological parameters within the spatial volume.

One approach that may be adopted to restore a stationary state based upon a non-stationary input data set is to apply sequential property transformations, removing the highest impacting trends first, until the remaining variance of the given geological parameter is truly random in nature. For example, a trend for a porosity parameter to decrease with vertical depth can be corrected for in the input data, leaving an underlying variance in porosity. A plurality of different geological parameters can potentially influence the observed variance in a given measured geological parameter. The order in which transformations are performed to process an input data set to remove any non-stationary effects associated with each of the plurality of different geological parameters is likely influence the processed input data values and hence to influence the accuracy of the geological model prediction.

According to the present technique, a plurality of sub-models are formed representing statistical fits between a measured geological parameter and one or more different geological parameters whose values may be measured or taken from a repository of reference material. In cases where the statistical fit depends upon two or more different geological parameters, the ordering of the fits to the respective different geological parameters is taken into account. Relative statistical weightings are calculated for the plurality of sub-models and these statistical weightings are used to calculate the probability of the particular scenario (i.e. the likelihood that the observed non-stationary behavior in the input data set can be accurately explained by the modeled variation with respect to the one or more geological measures corresponding to the transformation(s) of the given sub-model). In previously known techniques, although different transformations may be performed to reduce non-stationary effects in the input data, no assessment was made of the statistical significance (relative weightings) of the different transformations and hence the probability of individual scenarios of property distributions could not be inferred.

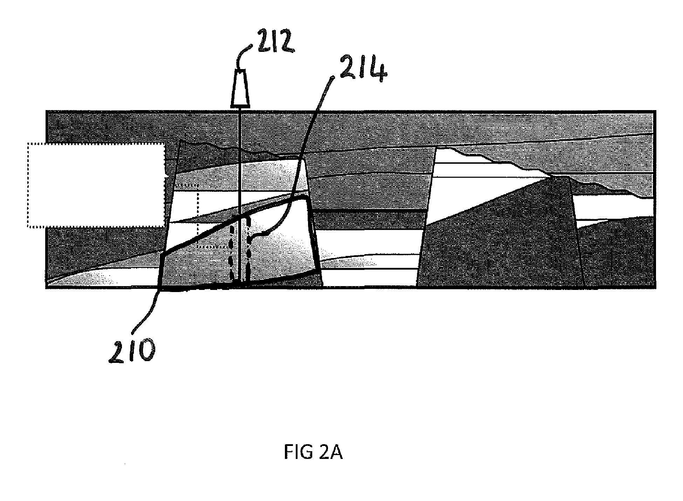

Figure 2A schematically illustrates a model volume 210 associated with an oil well 212 from which a data set comprising observations of at least one geological parameter is obtained from a sample core 214 within the model volume 210 by drilling into the well 212. For the purpose of the computer-based modeling of geological parameters throughout the model volume 210, information relating to a geological context of the sampled data may be stored in an information repository as contextual metadata. The contextual metadata in this example includes the data in the table below. It will be appreciated that a variety of different types and values of contextual metadata may be used according to the present technique and the table below is just one non-limiting example.

| Physical location | Danish North Sea |
|---|---|
| Depositional system | Shoreface |
| Depositional age | Kimmeridgian |
| Structural setting | Extensional |

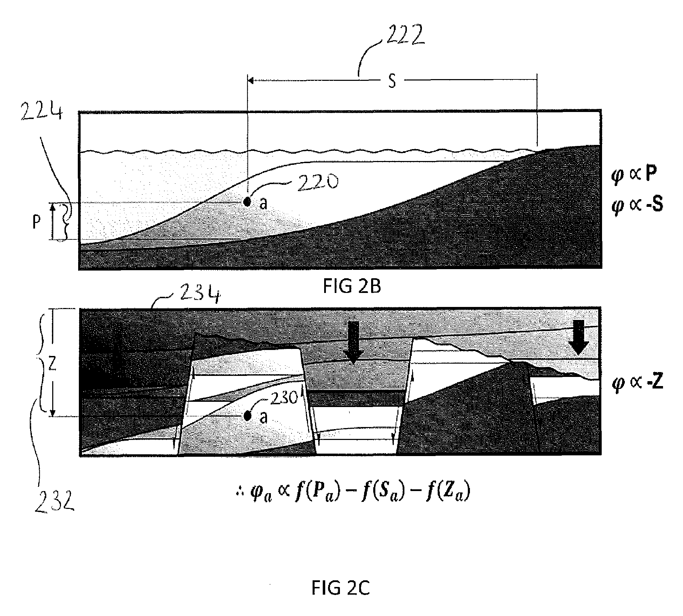

Figure 2B schematically illustrates an Earth volume showing a deposition of sediment in ancient times. Considering a sample position 220 within the ancient Earth volume, the expected mean geological parameter of porosity at the sample point "a" 220 is denoted $\varphi_a$ and the porosity may depend on a distance "S" 222 from the ancient shoreline and a height "P" 224 within a depositional unit of rock. It is known that the porosity $\varphi_a$ of shoreface sandstones decreases with increasing distance, S, from the ancient shoreline. It is also known that the porosity increases vertically with distance, P, within a single depositional unit.

Figure 2C schematically illustrates a spatial position 230 within a corresponding Earth volume as it appears at the present time. It can be seen that relative to Figure 2B, the Earth volume has exhibited further layers of deposition and movement of layers to provide a more complex geological structure relative to the structure in ancient times. In Figure 2C, the porosity depends upon a parameter Z, indicating a vertical burial depth below the Earth's surface 234. In Figure 2C, the porosity also depends upon the ancient times parameters P and S. Thus, for a given spatial position, a, within the current day earth volume, the porosity $\varphi_a$, is likely to show non-stationary effects with respect to functions of each of the variables P, S and Z.

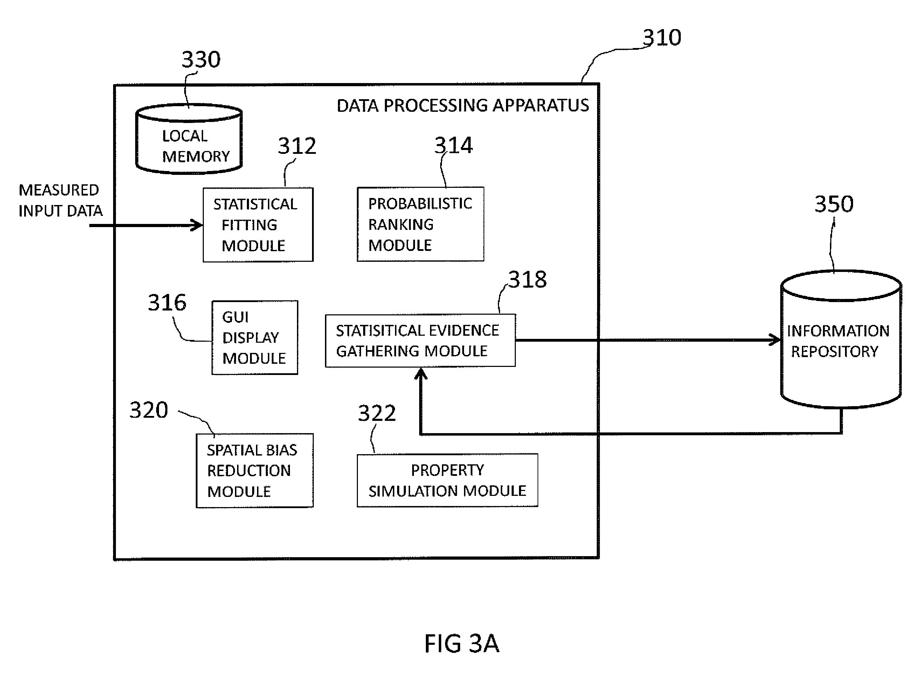

Figure 3A schematically illustrates an apparatus for implementing processing of measured geological data from its original observed, non-stationary state into a transformed stationary dataset of residual natural randomness. A data processing apparatus 310 comprises; a statistical fitting module 312; a probabilistic ranking module 314; a Graphical User Interface (GUI) display module 316; a statistical evidence gathering module 318; a spatial bias reduction model; and a sequential Gaussian simulation module 322. The data processing apparatus 310 also has a local memory for locally storing information and has access to a physically separate information repository 350 providing access to structured information such as databases and also to unstructured (but searchable) geological information. The information repository 350 in this embodiment is part of a local area network, but in alternative embodiments, the information repository 350 includes geological information available as structured and unstructured digital archives and retrieved via search queries initiated either by a user and/or by software installed on the data processing apparatus 310. The data processing apparatus 310 may be, for example, a mainframe computer, a personal computer, or a portable computing device such as a tablet or a mobile phone.

Data representing a measured geological property of a volume of the Earth, such as data collected via seismic imaging or by drilling boreholes at selected locations in a given Earth volume of are supplied to the statistical fitting module 312. The statistical fitting module 312 bins the input data to form a histogram and draws upon geological data stored in the local memory 330 to perform statistical fits of the measured data for the geological property relative to a number of different geological parameters such as spatial position within the rock volume in terms of Cartesian coordinates or grid indices. The statistical fits are performed with respect to individual geological measures (e.g. geological distance measures) such as those illustrated by Figures 2B and 2C as described above. If the measured data relates to porosity, a given statistical fit can be performed relative to reference data describing a known trend in a geological behavior or relative to other empirically obtained measurements of a different geological parameter. Each statistical fit can be viewed as a respective sub-model for behavior of the measured geological property.

The probabilistic ranking module 314 collates data from a plurality of different statistical fits corresponding to a respective plurality of sub-models performed by the statistical fitting module 312 and assigns a weighting to each of the fits. A weighting provides an indication of a statistical significance of a respective fit. This information is provided to the statistical evidence gathering module 318, which is configurable to display to a user, via the GUI display module, results of the statistical fits and probabilistic ranking. The statistical evidence gathering module 318 is operable to improve the accuracy of (to "fine-tune") the probabilistic rankings based upon statistical evidence gathered from the information repository 350.

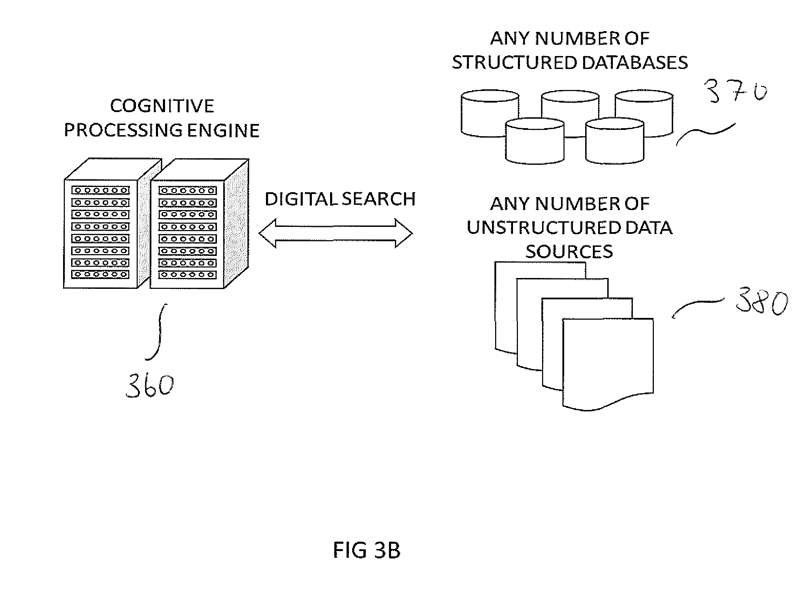

In some embodiments, cognitive processing techniques may be implemented to assist with the statistical evidence gathering. In some cases an observed dataset may not encompass enough measurements to show real geological trends. For example, if earth samples are all taken from a similar depth range, it may not be possible to either prove or disprove that porosity decreases with increasing burial depth based upon the original input data set. However, cognitive processing techniques may be implemented to search for analogous information available via the information repository 350, to supplement the observations to provide a larger depth range. Figure 3B schematically illustrates a cognitive processing engine 360, which in this embodiment is one type of information repository 250 that is accessible to the statistical evidence gathering module 318. The cognitive processing engine has access to a set of structured databases 370 and to a plurality of unstructured data sources 380.

Cognitive computing systems such as the cognitive processing engine 360 are designed to learn and interact directly with the human end-user by training artificial intelligence and machine learning algorithms to infer meaning and to predict outcomes. Cognitive processing works by constructing a probabilistic decision tree of possible meanings of natural language phrasing and searches of the information repository 350 can be performed for alternative explanations for combinations of words and images. The system relies upon a starting library of phrases and tactics, which are populated by an expert in geological modeling. Cognitive processing algorithms generate weighted plausible suggestions from an initial library, and subsequently update the algorithms with feedback from the end user, thereby allowing the system to 'learn' new responses. In the arrangement of Figure 3, user feedback is entered via the GUI display module 316. The cognitive processing system, which includes the structured databases 370 and the unstructured data sources 380, is pre-populated with a range of expected geological behaviours and contextual information such as common behaviours of particular rock types, or published trends within particular sedimentary basins. The system is also configurable to gather local project metadata (e.g. geographic spatial position, rock types in the model, porosity ranges) for use in constraining the algorithm implemented by the statistical evidence gathering module 318.

Overall, the system of Figures 3A and 3B is configured to supplement the limited local dataset corresponding to a measured geological property with analogous information from technical geological literature and gathered from the local environment or a similar remote physical environment. The analogous information is accessible via the information repository 350 and/or via the cognitive processing engine 360. The end user can accept or modify output and/or input of the statistical evidence gathering module 318, and the cognitive algorithm learns from each interaction.

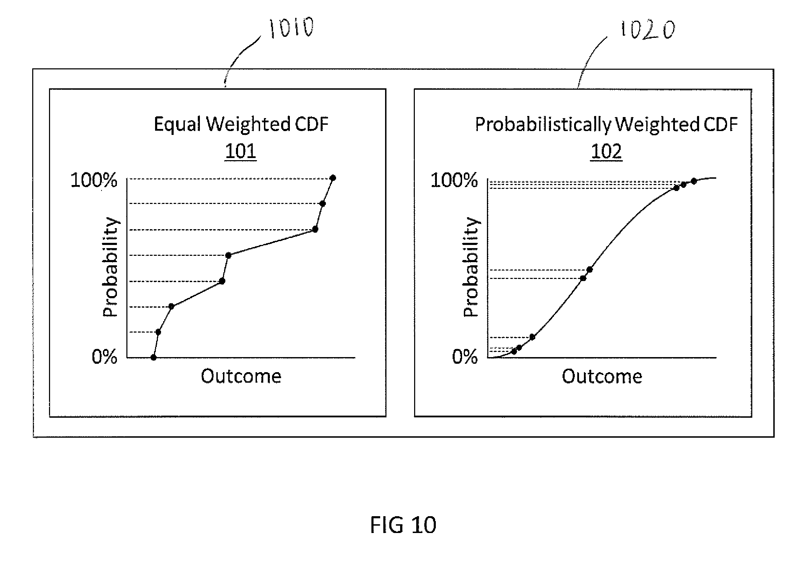

The final probabilistic rankings of the plurality of sub-models are supplied by the statistical evidence gathering module 318 to the spatial bias reduction module 320, which performs corrections to the measured input data based upon the weighted sub-models. The processed input data is then supplied to a property simulation module (e.g. a sequential Gaussian simulation module), which forms a prediction of an outcome such as a total volume of oil in a located reservoir or a measure of economic viability of oil extraction from a particular earth volume. The output of the property simulation module 322 according to the present technique is a three dimensional property model scenario, to which a scenario probability can be assigned. When a plurality of property model scenarios is assigned, the relative probabilities of each individual scenario may be used to define a weighted cumulative distribution function (CDF) of possible scenarios. Previously known techniques did not calculate weightings for the sub-models and resulted in an outcome corresponding to an equally weighted cumulative distribution function (see Figure 10 described below). A cumulative distribution function describes the probability that a real valued random variable V with a given probability distribution will be found to have a value less than or equal to v. In the case of a continuous distribution, the CDF gives the area under the probability function from minus infinity to v. In particular, the CDF, F, of a real-valued random variable V is the function given by: $F_V(v) = P(V \leq v)$. The CDF of a continuous random variable can be expressed as an integral of the probability density function $f_V$.

Note that any of the "modules" of Figure 3A may be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Any of the modules of Figure 3A can alternatively be considered to represent circuitry configured to perform the prescribed processing functions. Configuration of the circuitry to perform a specified function may be entirely in hardware, entirely in software or using a combination of hardware modification and software execution. Program instructions may be used to configure logic gates of general purpose or special-purpose processor circuitry to perform a processing function.

In yet further alternative embodiments, one or more of the modules of Figure 3A is implemented as a hardware circuit comprising custom Very-Large-Scale Integration (VLSI) VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

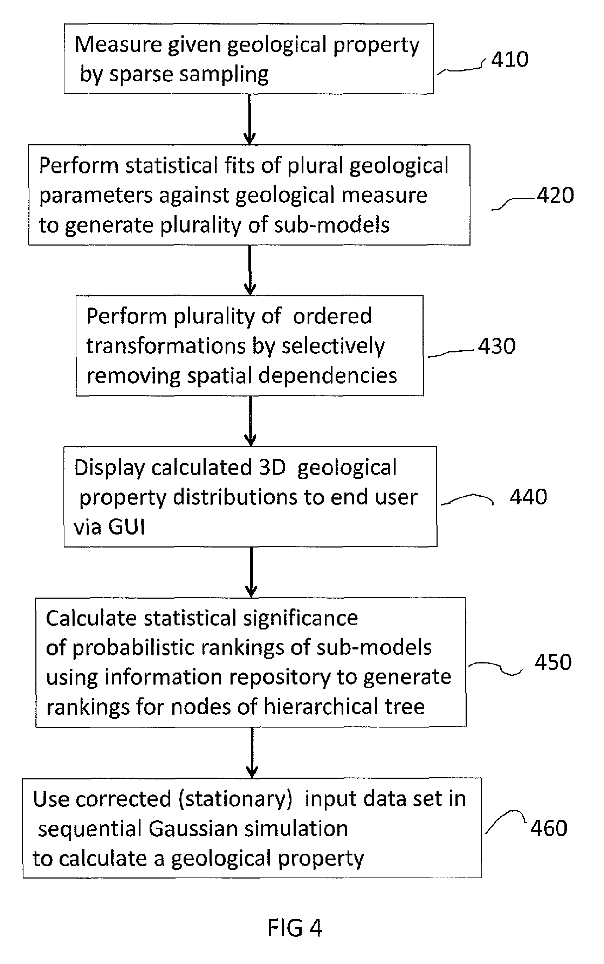

Figure 4 is a flow chart that schematically illustrates processing of measured geological data to reduce non-stationary effects in order to improve the determination of a physical property of the earth's interior (subsoil property) by processing of measured input data. The processed input data may then be supplied to a geological modeling algorithm.

At process element 410, a given geological property is measured at a collection of sampling points within the Earth volume of interest and the measured set of values is stored. At process element 420 a series of statistical fits is performed to identify behaviours and characteristics of the measured set of values. A plurality of statistical fits is performed to generate a respective plurality of sub-models for the behavior of the measured property across the Earth volume of interest. The statistical fits involve quantifying the behavior of the measured geological parameter with respect to a plurality of geological distance measures such as: the distance, P, within a depositional unit; the distance, S, from the ancient shoreline; the burial depth Z; and the true stratigraphic depth. The statistical fits define a characteristic function according to which the measured data varies according to the given geological distance measure.

The characteristic function provides a continuous description of the measured parameter across the geological volume of interest based upon data that is discretely sampled in space. A "transformation" is performed on the discrete data samples to remove or at least reduce the non-stationary effect with respect to the corresponding geological distance measure. The transformation may involve calculating an inverse of the determined characteristic function and applying it to the input data set. When non-stationary effects with respect to one geological distance measure have been transformed away, the process can be repeated by performing another different transformation on the data samples output by the previous transformation to remove or at least reduce non-stationary effects with respect to the different geological distance measure.

At process element 430 a plurality of ordered transformations is performed on the raw measured input data, with non-stationary behaviours of the measured parameter with respect to different individual geological parameters (e.g. true vertical depth and true stratigraphic thickness) being performed by permuting the ordering of successive transformations and observing the different outcomes. Due to complex inter-dependencies of the geological parameters, the order in which removal of non-stationary effects due to two or more different parameters is performed can result in a very different end result.

At process element 440, results of the ordered transformations may be presented to a user and, optionally, a user may provide manual input to influence estimates of the statistical significance of each of or some of the array of sub-models (transformation sequences). In this embodiment, the results are presented via a Graphical User Interface using graphical plots, which the user can readily interpret. In alternative embodiments, the processing of the input data is fully automated, in which case, process element 440 can be eliminated.

At process element 450 the statistical significance of each of the array of sub-models is calculated. Some sub-models may be excluded from the data set if they are considered to be statistically unlikely. The array of sub-models is ranked in a hierarchical decision tree depending upon relationships between the various transformations performed at process element 430. Each node of the hierarchical tree is assigned a weighting relative to the other nodes. The weightings are calculated using information extracted by the data processing apparatus 310 from the repository 350. The processed input data set output by process element 450 provides a prediction for representative values for the geological property at a continuum of points in 3 dimensional space. The characteristic function is used to determine a required representative value, which typically has a spatial dependency in one, two or three dimensions. In particular, for example, a mean value of porosity is predicted by removal or reduction of non-stationary behavior with respect to stratigraphic depth. The representative values for particular spatial locations could be for example a mean value or a median value.

Finally at process element 460, the processed input data set, in which non-stationary behavior has been removed, is input to a geological modeling algorithm such as a known sequential Gaussian simulation in order to determine a predicted value for one or more properties of the Earth's interior. Note that the processed input data from which the non-stationary behavior has been removed has been processed so as to make a prediction of a physical property of the subsoil, the predictions being defined by, for example, data points on a graph of the calculated characteristic function. The outcome of process element 450 is not a single processed input data set, but a plurality of sub-models, each corresponding to a different sequence of ordered transformations having been performed to sequentially eliminate non-stationary effects with respect to a corresponding sequence of geological distance parameters.

One, many or all of these sub-models (transformation sequences) may be supplied as input to the geostatistical algorithm depending upon a user's requirements for describing the uncertainty of the behavior of the physical property whose value is to be predicted. Thus, for example, inputting the empirically measured data for porosity, corrected according to the present technique for non-stationary behavior, the output of the sequential Gaussian simulation (or alternative property simulation module) could be a more accurate calculation of the evidence-weighting of alternative models for a total volume of an oil in place in reservoir in the Earth volume where the porosity measurements were made or the total volume of oil which is estimated to be produced

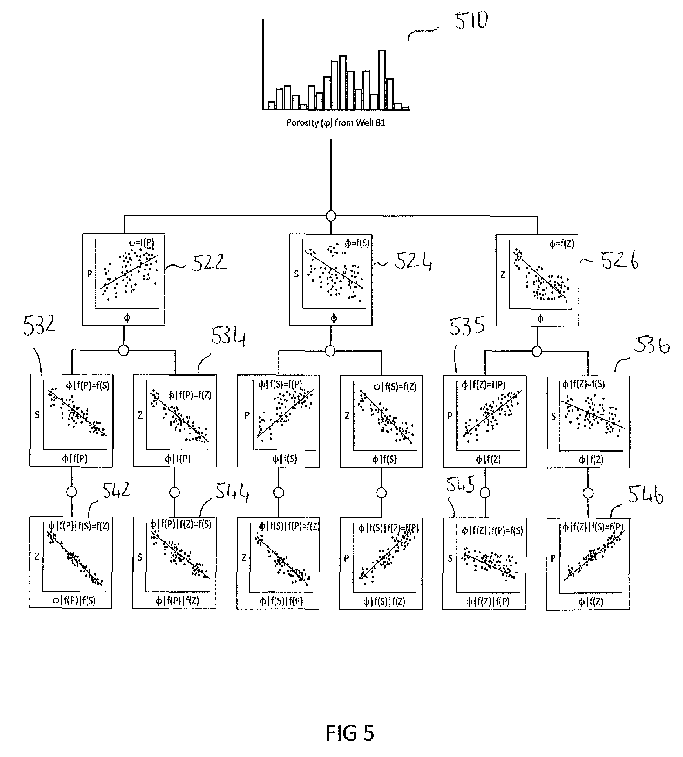

Figure 5 schematically illustrates a sequence of processing of geological measurement data in which the hierarchical arrangement of the sub-models (or equivalently the transformations to remove non-stationary behavior) is shown. In this example embodiment the input data set corresponds to measured values of the Earth's porosity in the earth volume of interest. Ideally, the sampled values of porosity would be truly representative of the entire earth volume of interest and thus values corresponding to each of the cells shown in the three dimensional volume of Figure 1A would be available as measured values of the input data set. However, in reality, the data is typically sparsely sampled, so the histogram of an uppermost hierarchical node 510 may in fact be less representative of the Earth volume of interest than required. For example, the samples may not span a sufficient depth within the volume. In this case, the input data may be supplemented by information from the information repository (see Figure 2) and/or by using the cognitive processing engine 360 to improve the accuracy of statistical evaluation of the transformations performed at process element 420. The hierarchical node 510 shows a histogram representing the distribution of measured value of porosity accumulated from a plurality of sampling points along the x-axis. The vertical (y-axis) corresponds to an occurrence frequency of the porosity.

A sequence of transformations is performed according to a hierarchical tree having a plurality of nodes. In this example embodiment a first hierarchical level involves conducting a test for evidence of non-stationary behaviourwith respect to each of three geological distance parameters (examples of geological measures): P, S and Z. The first hierarchical level comprises scatter plots 522, 524 and 526. A first scatter plot 522 is a plot of the raw input data for porosity against vertical distance P within a depositional unit. A second scatter plot 524 is a plot of the raw input data for porosity against a distance S of the sample point from the ancient shoreline. A third scatter plot 526 is a plot of the raw input data for porosity against a distance Z representing a burial depth of the sample point. In each case, a function is fitted to the discrete data points to characterize the behavior of the porosity with respect to the given geological distance measure. For simplicity, simple linear fits have been illustrated in Figure 5, but in reality, the functional relationship is likely to be more complex than a linear fit.

Once the characteristic function has been defined, an inverse transformation is performed to remove the non-stationary effects in porosity with respect to the given geological distance measure and then the transformed discrete input data is supplied to a next level of the hierarchical tree where another test for evidence of non-stationary behaviour is performed with respect to a different geological distance measure. Thus, for example, plot 532 involves performing a statistical fit of the input data that has already been transformed with respect to the parameter P to determine a characteristic function with respect to S and to transform the data to remove non-stationary effects with regard to S. Similarly, the plot 534 also takes as input, data already transformed to remove the non-stationary effects of the distance parameter P and determines a characteristic function with respect to the distance parameter Z, which is used to transform away non-stationary effects with regard to Z. After the function at the second hierarchical level is defined, the dataset is transformed again. At the next hierarchical level relative to the two-transformation stage 532, 534, a third transformation is performed such that hierarchical node 542 corresponds to the input data having been transformed with regard to P and then S and then Z. Similarly, hierarchical node 544 corresponds to the input data having been transformed to remove non-stationary effects of P and then Z and then S.

The depth of transformations, as well as the order of the transformation sequence has an impact on the three dimensional result, away from the observational data. For example, if the bulk of the range of observed porosity is assumed to be a function of depth (porosity decreasing with depth), then the 3D extrapolation of the observed data will probably result in the lower parts of the model Earth volume being very low porosity, and the upper parts of the Earth volume being high porosity. Given that oil is buoyant relative to water, this first possible interpretation gives a more optimistic outcome for hydrocarbon reserves. Conversely, a second interpretation could be that low porosity values are assumed to be a function of the distance from the ancient shoreline, and then its current burial depth may be irrelevant to the expectation of low porosity. If the shoreline is towards the deeper parts of the reservoir, then the result could be higher porosity at depth, and low porosity in areas filled by hydrocarbons - a pessimistic view of the reservoir. Both first and second interpretations may be valid alternative interpretations.

The decision tree of hierarchical nodes Figure 5 represents all possible permutations of a transformation sequence with three possible non-stationary effects, the non-stationary effects being with respect to the geological distance parameters P, S and Z. It is unknown (at the onset) what (if any) transformations will be required to produce a stationary dataset. Therefore it is possible that the best outcome will be to stop at any one of the nodes, and accept the data at that point. If the real dataset is actually stationary, then it would be appropriate to apply no transformations; conversely, if all non-stationary processes are in action for a reservoir, then it would be appropriate to do all three - however the order of transformation still needs to be investigated. Therefore, it is possible that the best transformation sequence could be any one of the nodes of the hierarchical tree corresponding to the transformation sequence.

It can be seen from Figure 5 that when considering non-stationary behavior of observed data samples for porosity with respect to three different geological distance measures, there is a hierarchical tree of transformations comprising a total of sixteen different ordered permutations of non-stationary effect removal including the uppermost node 510 that involves performing no transformations on the observed raw input data set.

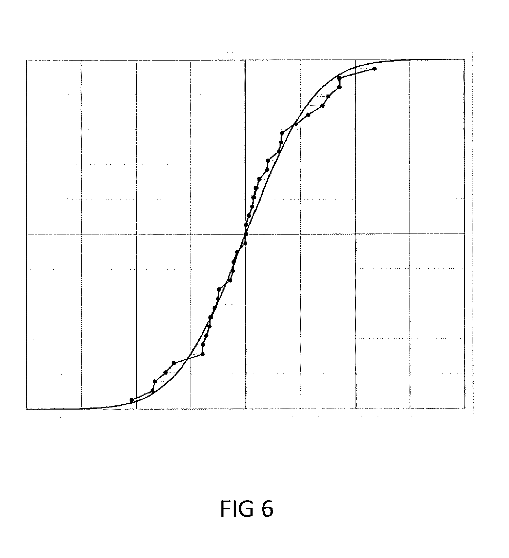

According to the present technique, a weighting is calculated for each node of the hierarchical tree to represent the statistical weighting that is associated with the raw input data transformed according to the sequence defined by the path arriving at that node. The statistical weighting is calculated according to a range of metrics, including (but not limited to) the "goodness of fit" of the data to the expected geological behaviours, the magnitude of residual variance, and the mathematical similarity of the residual variance to an expected behaviour, such as a Gaussian distribution. Figure 6 schematically illustrates one non-limiting example of calculation of a node weighting based upon the sum of the squared differences of the transformed dataset Cumulative Distribution Function (CDF) from a Gaussian CDF, where a lower error indicates a higher probability of a stationary state with respect to the given geological distance measure.

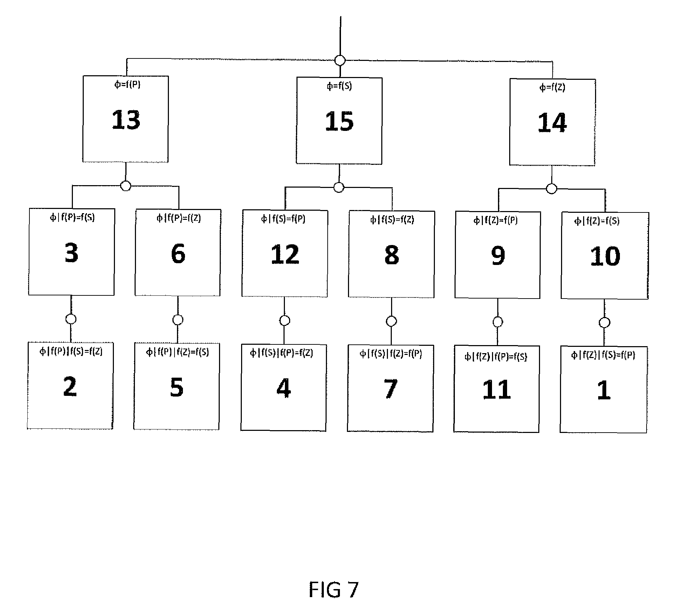

Based upon the calculated statistical weightings of the nodes, a ranking can be assigned to each node of the hierarchical tree of Figure 5 to indicate which transformation sequences best fit the empirical input data. Figure 7 shows an example ranking, where the most favourable transformation sequence is assigned a rank of 1, whilst the least favourable transformation sequence has been assigned a rank of 15. It will be appreciated that the precise numbers assigned to the ranking are not important, but what is important is that the ranking readily distinguishes between a sub-model (transformation) that provides a good statistical fit and a sun-model that provides a poorer statistical fit. In some embodiments, a threshold is applied such that sub-models for which statistical weightings fall below the threshold are eliminated as sub-models and thus are not used as input to the geostatiatical modeling algorithm. It can be seen that in the example ranking of Figure 7, that the node 710, which involves three successive transformations with respect to Z, S and P in turn provides the best sub-model of the set of transformations corresponding to the hierarchical tree. The next best sub-model is the model with rank 2, which involves successive transformations by P, S and Z. The next best sub-model is the model with rank 3, which involves two successive transformations by P and S.

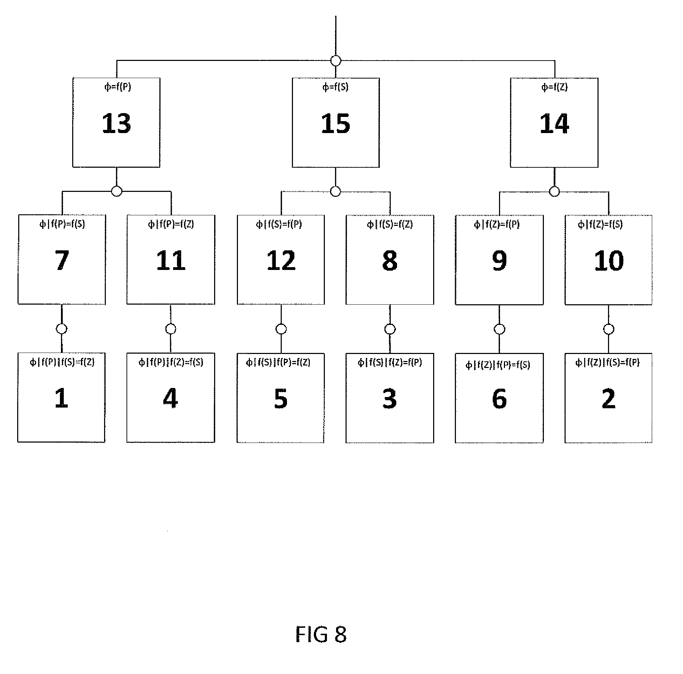

Figure 8 schematically illustrates the ranking of the hierarchical nodes of Figure 5, but adjusted so that after the original set of transformations was performed, the statistical fits were enhanced based upon additional evidence returned by the cognitive search engine 330 (see Figure 3B). The results of the cognitive search may have the effect of augmenting the spatial range of a limited observational data set and/or generating alternative characteristic equations based upon, for example, the contextual metadata specified for Figure 2A. It can be seen from Figure 8 that some of the rankings of given nodes of the hierarchical tree have changed relative to the original rankings of Figure 7. If the cognitive search engine has been used to augment the range of the observational data or to provide more accurate estimates of the characteristic functions, then the rankings of Figure 8 should be more accurate than the rankings of Figure 7. In Figure 8, the best sub-model corresponds to three successive transformations by P, S and Z in turn (bottom left-most node) whereas in Figure 7, the bottom right-most node corresponding to successive transformations in Z, S and P gave the highest ranking.

The cognitive processing involves referencing the observed datasets with contextual metadata of the model against a library of expected geological processes to generate one or more evidence weighted hypotheses of geological behaviours. Once the hypotheses are generated, additional supporting data from analogous data sources (such as other oilfield datasets, results from a rock outcrop study or a published research paper detailing how porosity is expected to behave) can be referenced in, to supplement the limited local observed data. The weighting applied to the analogue data is controlled by the evidence weighting of the original hypothesis and the contextual similarity. The result of the cognitive processing is a more expansive dataset from which to estimate geological properties away from the observed data points. The cognitive processing engine is configured to calculate statistical evidence that an external data set (i.e. not the measured data set) is relevant to the problem of defining the characteristic function and the associated transformation. The cognitive processing algorithm can be trained via user input, for example, by rejecting a hypothesis presented by the computer.

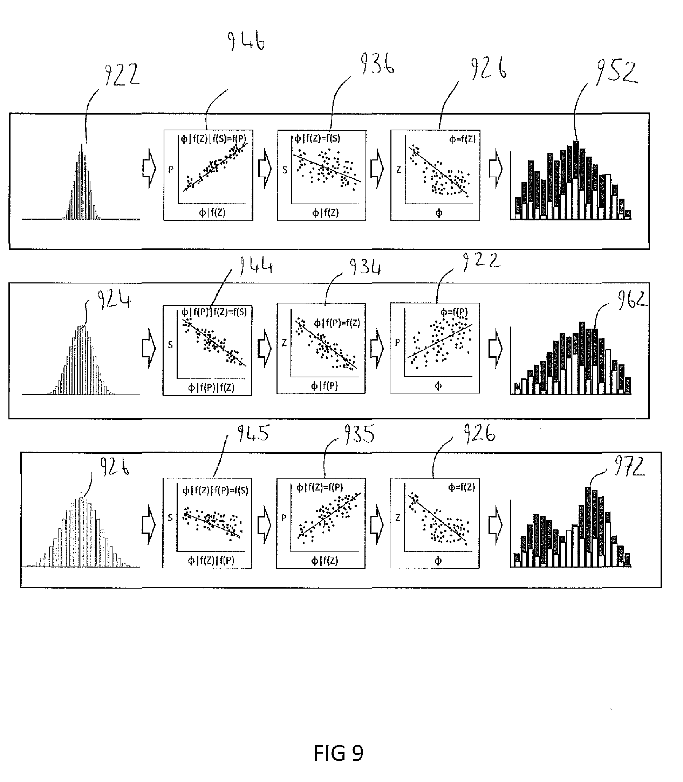

Figure 9 schematically illustrates processing performed based upon the processed input data corresponding to the plurality of sub-models of the hierarchical tree of Figure 5. The end result of the pre-processing of the input data prior is a normal-score Gaussian distribution of residual noise, which has a mean of 0 and a standard deviation of 1. The geostatistical routine then distributes this residual throughout the model using one of many possible algorithms (such as Sequential Gaussian Simulation). The transformations are inverted and applied sequentially in reverse order, to return the simulated property back to the original observed property range. One, many, or all possible transformation sequences (sub-models) may be used, depending upon the user's requirements for describing the uncertainty of the property behaviour.

According to the present technique, the geological data processing method that performs the transformations and calculates the weighting associated with a given transformation is to used to proactively search for the trends in the measured input data given expected geological behaviours, and to compute the likelihood of each alternative scenario. In previously known methods either the raw input data would be fed to the geostatistical algorithm without correcting for non-stationary behavior or a user would attempt to compensate for non-stationary behavior by subjectively identifying and correcting for trends based upon experience.

The shape of the residual geostatistical noise (the left most histogram) 922, 924, 926 in Figure 9 is assumed to be stationary. For example histogram 922 represents the distribution of data that has been transformed along the path 526, 536 and 546 in Figure 5, with non-stationary effects with respect to Z and then S and then P having been removed in sequence. Histogram 924 represents the distribution of data that has been transformed along the path 522, 534 and 544 in Figure 5, with non-stationary effects with respect to P and then Z and then S having been removed in sequence. The histogram 926 in Figure 9 represents the distribution of data that has been transformed along the path 526, 535 and 545 in Figure 5, , with non-stationary effects with respect to Z and then P and then S having been removed in sequence. The shape parameters of the residual noise in the stationary processed input data represented by the histograms 922, 924 and 926 is dependent upon a residual remaining, after the last transformation is applied and is therefore dependent upon which transformation sequence is being applied.

The system then applies each transformation in reverse, to restore the final 3D property realization to a non-stationary state. Thus, for example, the stationary data histogram 922 is transformed to restore non-stationary behavior with respect to P at step 946, to restore non-stationary behavior with respect to S at step 936 and to restore non-stationary behavior with respect to Z at step 926. Similar reverse transformation sequences are performed using the relevant characteristic functions in the case of histograms 924 and 926. No matter what sequence of transformations is applied, the geological model will naturally reproduce the observational data at the point of measurement (white bars in the histogram 952); however the 3D histogram of the property distribution will be different, depending upon what sequence is applied (grey bars in the histogram 952). It can be seen by comparison of the white bars in the histograms 952, 962, 972 representing the reverse transformation process, that the profile of the input data sample is identically recovered in each case. On the other hand, the geological property distribution extrapolated from the sparsely sampled data to the modeled Earth volume in question differs appreciably in profile depending upon the particular transformation sequence chosen. This can be seen from the difference in the profiles of the grey bars in the histograms 952, 962 and 972 of Figure 9.

Figure 10 schematically illustrates an equally weighted CDF 1010 as would be produced as output of a geostatistical algorithm without the availability of the statistical weights calculated according to the present technique. In previously known techniques, no account has been taken of the statistical relevance of each sub-model when processing the sampled input data to reduce non-stationary effects. Figure 10 also shows a probabilistically weighted CDF as calculated according to the present technique. By inputting the appropriate statistical weightings to the sub-models in which non-stationary effects due to one or more geological parameters have been removed, the CDF becomes a probabilistically weighted CDF, which provides a more accurate prediction for the value of the geological parameter of interest.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same. The computer program instructions may be provided on a transitory or a non-transitory medium.

**Claims**

1. A method of processing geological data, the method comprising:

   receiving an input data set representing a measured geological parameter of a volume of the Earth, the input data set having a set of values for the geological parameter, the values potentially having spatial bias whereby there is a variation in a value of the geological parameter depending upon spatial coordinates within the Earth volume;
   analysing the input data of the geological parameter with respect to at least one given geological measure to define a characteristic function of the input data with respect to the at least one given geological measure;
   applying an inverse of the characteristic function to the input data to perform a transformation to reduce the spatial bias of the input data set with respect to the given geological measure to generate transformed input data set;
   calculating a statistical weighting of the transformation depending upon an estimated accuracy of the determined characteristic function; and

predicting a representative function for the geological parameter with respect to the at least one given geological measure based upon the transformed input data set and the statistical weighting, wherein the geological parameter is a physical property of the Earth's interior.

2. The method according to claim 1, wherein an ordered hierarchy of transformations is performed on the input data set and wherein the first hierarchical level comprises transforming the input data set with respect to the given geological measure and a higher hierarchical level comprises transforming with respect to a different geological measure, the transformed input data set from the immediately lower hierarchical level.

3. The method according to claim 2, wherein the ordered hierarchy of transformations comprises a plurality of hierarchical nodes, each hierarchical node corresponding to a given transformation sequence having been performed on the input data set and wherein statistical weightings are calculated for at least a subset of the hierarchical nodes.

4. The method according to claim 2 or claim 3, wherein the ordered hierarchy of transformations comprises differently ordered permutations of transformations of the input data with respect to a plurality of different geological measures.

5. The method according to any one of claims 1 to 4, wherein the geological measure comprises one of: a distance from an ancient shoreline; a vertical distance within a single depositional unit; a burial depth in a Cartesian coordinate system; a 2-dimesional map area; a 3 dimensional volume of the Earth; and a true stratigraphic thickness.

6. The method according to claim 1, wherein the statistical weighting is calculated using at least one of: a sum of squared differences between a cumulative distribution function corresponding to the transformed input data set and a theoretical Gaussian cumulative distribution function; a correlation coefficient of the input data set relative to the determined characteristic function; a standard deviation of the transformed input data set.

7. The method according to any one of claims 2 to 6, comprising determining a relative ranking for each node of the hierarchy of transformations, the ranking indicating statistical confidence in the transformation(s) of the corresponding node.

8. The method according to claim 7, comprising performing a cognitive processing query comprising accessing a repository of geological information and adjusting the relative rankings for the hierarchical nodes based upon the cognitive processing query.

9. The method according to any one to the preceding claims comprising accessing a repository of stored geological information and using information from the repository to augment input data for the measured geological parameter to improve an accuracy of determining the characteristic function.

10. The method of claim 9, wherein information from the repository is used to extend a range in the geological measure relative to a range spanned by the input data for the measured geological parameter.

11. The method of any one of claims 1 to 10, comprising supplying the transformed input data and the corresponding statistical weighting to a geostatistical modelling algorithm and wherein the geostatistical modelling algorithm reduces in the transformed input data statistical noise that cannot be attributed to geological parameters and subsequently reverses the transformation(s) to restore the measured parameter back to a non-stationary state.

12. The method of any one of claims 1 to 11, wherein at least one predicted representative value for the geological parameter is derived from the representative function.

13. A computer program product embodied on a computer-readable medium comprising program instructions, configured such that when executed by processing circuitry, cause the processing circuitry to:

receive an input data set representing a measured geological property of a volume of the Earth, the input data set having a set of values a measured parameter, the values of the measured parameter having a potential spatial bias whereby there is a variation in a value of the measured parameter depending upon spatial coordinates within the earth volume;
calculate a behaviour of the input data of the measured parameter with respect to at least one given geological measure to define a characteristic function of the input data with respect to the at least one given geological measure;

apply an inverse of the characteristic function to the input data to perform a transformation to reduce the spatial bias of the input data set with respect to the at least one given geological measure;
calculate a statistical weighting of the transformation depending upon the estimated accuracy of the determined characteristic function; and
predict a representative function of the measured geological parameter with respect to the at least one geological measure using the transformed input data and the statistical weighting wherein the geological parameter is a physical property of the Earth's interior.

**14.** A data processing apparatus comprising:

circuitry for receiving an input data set representing a measured geological property of a volume of the Earth, the input data set having a set of values a measured parameter, the values of the measured parameter potentially having spatial bias whereby there is a variation in a value of the measured parameter depending upon spatial coordinates within the earth volume;
circuitry for calculating a behaviour of the input data of the measured parameter with respect to at least one given geological measure to define a characteristic function of the input data with respect to the at least one given geological measure;
circuitry for applying an inverse of the characteristic function to the input data to perform a transformation to reduce the spatial bias of the input data set with respect to the given geological distance measure;
circuitry for calculating a statistical weighting of the transformation depending upon the estimated accuracy of the determined characteristic function;
circuitry for predicting a representative function for the geological property depending upon the transformed input data and the statistical weighting wherein the geological parameter is a physical property of the Earth's interior..

**15.** The data processing apparatus of claim 14, comprising cognitive processing circuitry for generating queries to an information repository relevant to the input data set and wherein results of the cognitive processing are fed back to at least one of the circuitry for calculating a behaviour, the circuitry for applying an inverse for the characteristic function , the circuitry for calculating a statistical weighting and the circuitry for predicting a representative function to provide a prediction of the representative function dependent upon information from the information repository.

FIG 1A

FIG 1B

FIG 2A

FIG 2B

$$\therefore \varphi_a \propto f(P_a) - f(S_a) - f(Z_a)$$

FIG 2C

FIG 3A

EP 3 026 465 A2

COGNITIVE
PROCESSING ENGINE

ANY NUMBER OF
STRUCTURED DATABASES

*370*

DIGITAL SEARCH

ANY NUMBER OF
UNSTRUCTURED DATA
SOURCES

*380*

*360*

FIG 3B

Measure given geological property
by sparse sampling — 410

Perform statistical fits of plural geological
parameters against geological measure
to generate plurality of sub-models — 420

Perform plurality of ordered
transformations by selectively
removing spatial dependencies — 430

Display calculated 3D geological
property distributions to end user
via GUI — 440

Calculate statistical significance
of probabilistic rankings of sub-models
using information repository to generate
rankings for nodes of hierarchical tree — 450

Use corrected (stationary) input data set in
sequential Gaussian simulation
to calculate a geological property — 460

FIG 4

FIG 5

FIG 6

φ=f(P)

**13**

φ=f(S)

**15**

φ=f(Z)

**14**

φ|f(P)=f(S)

**3**

φ|f(P)=f(Z)

**6**

φ|f(S)=f(P)

**12**

φ|f(S)=f(Z)

**8**

φ|f(Z)=f(P)

**9**

φ|f(Z)=f(S)

**10**

φ|f(P)|f(S)=f(Z)

**2**

φ|f(P)|f(Z)=f(S)

**5**

φ|f(S)|f(P)=f(Z)

**4**

φ|f(S)|f(Z)=f(P)

**7**

φ|f(Z)|f(P)=f(S)

**11**

φ|f(Z)|f(S)=f(P)

**1**

FIG 7

FIG 8

FIG 9

FIG 10

EP 3 026 465 A2